Europäisches Patentamt

European Patent Office

Office européen des brevets

(19)

(11) Numéro de publication : **0 508 852 A1**

# (12) DEMANDE DE BREVET EUROPEEN

(21) Numéro de dépôt : **92400817.0**

(22) Date de dépôt : **25.03.92**

(51) Int. Cl.$^5$ : **G21C 19/10**

(30) Priorité : **08.04.91 FR 9104258**

(43) Date de publication de la demande :
**14.10.92 Bulletin 92/42**

(84) Etats contractants désignés :
**BE CH DE ES GB LI SE**

(71) Demandeur : **FRAMATOME**
**Tour Fiat 1, Place de la Coupole**
**F-92400 Courbevoie (FR)**

(72) Inventeur : **Beneck, Jean**
**5, rue des Coteaux**
**F-94490 Ormesson (FR)**
Inventeur : **Morez, Bernard**
**1, rue Lasne Berger**
**F-78260 Acheres (FR)**

(74) Mandataire : **Habasque, Etienne Joel**
**Jean-François et al**
**Cabinet Lavoix 2, Place d'Estienne d'Orves**
**F-75441 Paris Cédex 09 (FR)**

(54) **Outil de manutention d'une grappe de crayons de poison consommable.**

(57)    Cet outil, comportant une tête de préhension (1) de la grappe (2), reliée à un organe de manutention (3) coulissant dans un corps d'outil (4) entre une position active dans laquelle la tête (1) et au moins une partie de l'organe (3) font saillie hors du corps (4) et une position escamotée dans laquelle la tête (1), l'organe de manutention (3) et au moins une partie de la grappe (2) s'étendent dans le corps, et des peignes (5,6,7,8,9, 10) de guidage des crayons, à une extrémité du corps (4) et déplaçables entre une position escamotée dans laquelle ils s'étendent le long du corps (4) et une position active dans laquelle ils s'étendent perpendiculairement à celui-ci, pour guider les crayons, est caractérisé en ce qu'il comporte des moyens (13) de sollicitation des peignes en position active, et des moyens d'escamotage (15) de ces peignes, déplaçables entre une position d'escamotage des peignes et une position de libération de ceux-ci, par la tête (1) et/ou l'organe de manutention (3) lors de leur déplacement entre leurs positions active et escamotée dans le corps (4).

FIG.1

EP 0 508 852 A1

La présente invention concerne un outil de manutention d'une grappe de crayons de poison consommable utilisé en particulier dans un bâtiment combustible d'une centrale nucléaire, par exemple du type PWR, pour effectuer des manutentions de grappes de crayons de poison consommable.

Cet outil est utilisé notamment lors du premier rechargement du réacteur nucléaire et permet d'extraire sous eau les grappes de crayons de poison consommable, insérées dans les assemblages combustibles et de les réintroduire soit dans des assemblages combustibles usés, soit dans des alvéoles de rateliers de stockage du combustible usé, munis d'adaptateurs.

Cet outil est accroché à un treuil d'un pont passerelle déplaçable dans le bâtiment combustible et comporte une tête de préhension de la grappe, reliée à l'extrémité d'un organe de manutention déplaçable à coulissement dans un corps d'outil entre une position active dans laquelle la tête et au moins une partie de l'organe font saillie hors du corps pour la préhension de la grappe et une position escamotée dans laquelle l'organe, la tête de préhension et une partie de la grappe s'étendent dans le corps, pour le déplacement de la grappe.

De plus, cet outil comporte des peignes de guidage des crayons, prévus à l'extrémité correspondante du corps et déplaçables par relèvement entre un position escamotée dans laquelle ils s'étendent sensiblement le long de la paroi du corps et une position active dans laquelle ils s'étendent sensiblement perpendiculairement à celle-ci pour guider les crayons lorsque ceux-ci s'étendent au moins en partie dans le corps.

Dans l'état de la technique, le déplacement de ces peignes entre les positions escamotée et active se fait à l'aide d'une tringlerie de manoeuvre actionnable par exemple par un utilisateur.

Cependant, cette tringlerie présente un certain nombre d'inconvénients au niveau de sa structure relativement complexe, de son encombrement et des risques de blocage des peignes.

Le but de l'invention est donc de résoudre ces problèmes en proposant un outil de manutention dont la structure soit simple, dont l'encombrement soit réduit et dans lequel le déplacement des peignes entre les positions active et escamotée, soit réalisé de manière très fiable, sans risque de blocage.

A cet effet, l'invention a pour objet un outil de manutention, du type tel que décrit précédemment, caractérisé en ce qu'il comporte des moyens élastiques de sollicitation des peignes en position active et des moyens d'escamotage de ces peignes à l'encontre de la sollicitation des moyens élastiques, déplaçables entre une position active d'escamotage des peignes et une position escamotée de libération de ceux-ci, par la tête de préhension et/ou l'organe de manutention lors de leur déplacement entre leur position active et leur position escamotée dans le corps.

L'invention sera mieux comprise à l'aide de la description qui va suivre, donnée uniquement à titre d'exemple et faite en se référant aux dessins annexés, sur lesquels :

– la Fig.1 représente une vue en coupe d'une partie d'un outil de manutention selon l'invention, dans laquelle les peignes sont représentés en position escamotée;

– la Fig.2 représente une vue en coupe d'une partie d'un outil de manutention selon l'invention, dans laquelle les peignes sont représentés en position active; et

– la Fig.3 représente une vue de dessus en coupe partielle prise suivant la ligne 3-3 de la Fig.1.

Ainsi qu'on l'a indiqué précédemment, l'outil de manutention d'une grappe de crayons de poison consommable, selon l'invention, est utilisé en particulier lors du premier rechargement du réacteur nucléaire d'une centrale.

Cet outil est accroché par exemple au treuil d'un pont passerelle par l'intermédiaire d'une élingue et est positionné au-dessus d'un assemblage combustible comprenant une grappe de crayons de poison consommable. Cet assemblage est par exemple stocké dans un ratelier de stockage de combustible usé.

L'outil est déposé sur la tête de l'assemblage combustible à l'aide du treuil du pont passerelle, ce qui rend possible, dans cette position, l'extraction de la grappe.

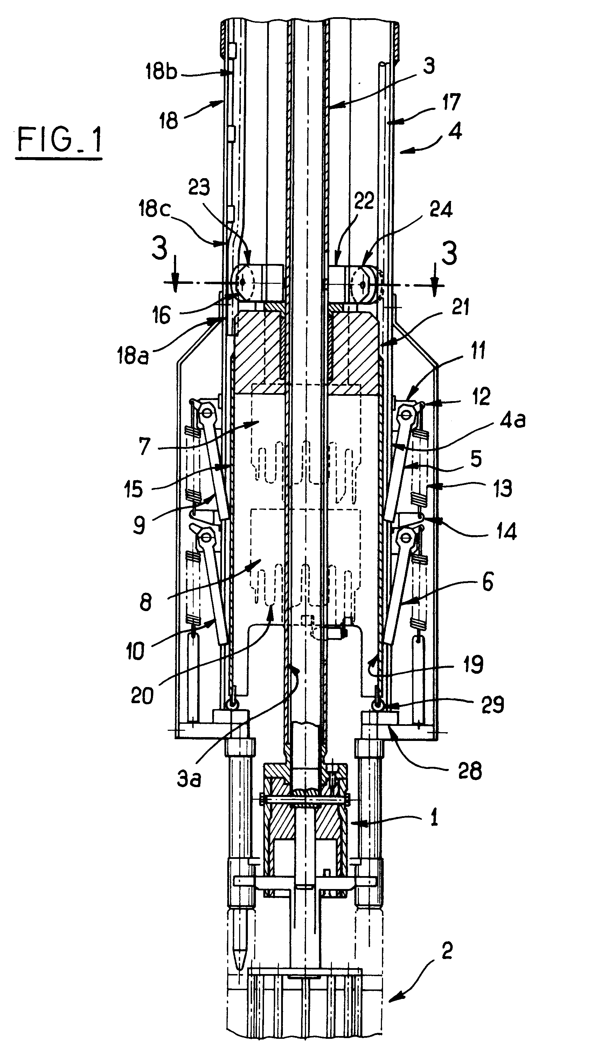

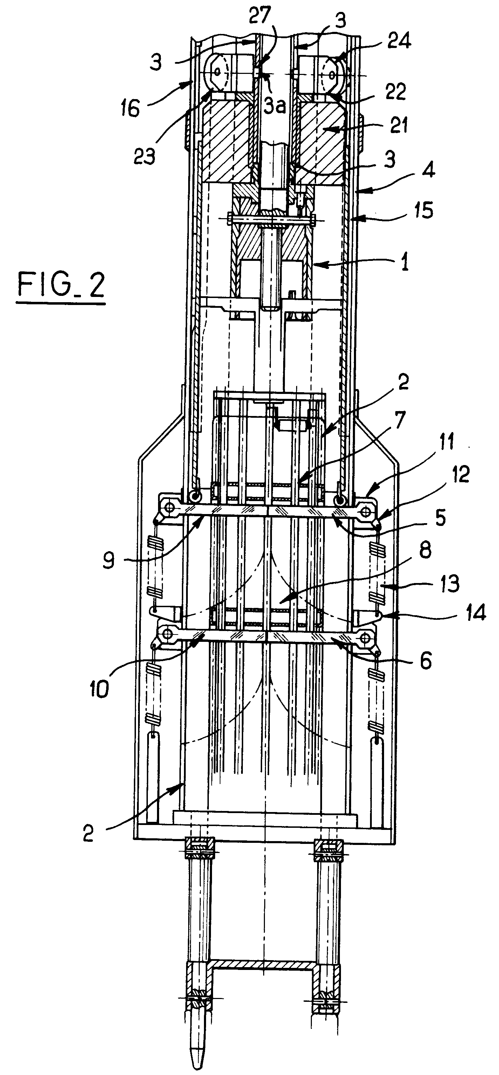

Comme on peut le voir sur les Fig.1 à 3, l'outil de manutention selon l'invention comporte de manière connue en soi une tête 1 de préhension de la grappe 2 de crayons de poison consommable. Cette tête de préhension présente une structure de type connu en soi et est reliée à une extrémité d'un organe de manutention 3 dont l'autre extrémité est reliée à tout moyen de manoeuvre connu en soi. Cet organe de manutention 3 est monté déplaçable à coulissement dans un corps d'outil 4 entre une position active représentée sur la Fig.1, dans laquelle la tête de préhension 1 et au moins une partie de l'organe de manutention 3 font saillie hors du corps d'outil 4 pour la préhension de la grappe et une position escamotée représentée sur la Fig.2, dans laquelle l'organe de manutention, la tête de préhension et une partie au moins des crayons de la grappe s'étendent dans le corps 4, pour le déplacement de la grappe.

Le corps d'outil 4 présente avantageusement une section carrée.

Cet outil comporte également à son extrémité inférieure des peignes de guidage des crayons de poison.

Ces peignes sont par exemple disposés deux par deux l'un au-dessus de l'autre, sur chaque face du corps d'outil, c'est à dire à 90° les uns par rapport aux autres. Les peignes visibles sur ces figures, sont référencés respectivement 5,6,7,8,9 et 10.

La forme de ces peignes étant bien connue dans l'état de la technique, on ne la décrira pas plus en détail.

On notera cependant que ces peignes sont articulés à l'une de leurs extrémités sur des ferrures de support, fixées sur le corps, et sont montés déplaçables entre une position escamotée représentée sur la Fig.1, dans laquelle ces peignes s'étendent sensiblement le long de la paroi du corps 4 et une position active, représentée sur la Fig.2, dans laquelle ces peignes s'étendent sensiblement perpendiculairement à cette paroi du corps pour guider les crayons de la grappe 2.

Ce déplacement des peignes entre les positions escamotée et active, est réalisé par relèvement de ceux-ci.

On décrira ci-après dans le détail la structure de fixation du peigne 5 sur le corps 4 de l'outil, la structure de fixation de chaque peigne étant identique.

Ainsi qu'on l'a indiqué précédemment, le peigne 5 est articulé à l'une de ses extrémités sur des ferrures, par exemple 11, disposées sur la surface externe du corps d'outil 4, de part et d'autre d'une lumière 4a de passage de ce peigne 5, ménagée dans le corps d'outil 4. Les ferrures sont fixées sur ce corps d'outil par tous moyens appropriés.

Par ailleurs, le peigne 5 comporte un bras de manoeuvre 12 s'étendant au-delà de la zone d'articulation de celui-ci sur le corps et sur lequel est accrochée l'extrémité d'un organe élastique 13, constitué par exemple par un ressort, de sollicitation de ce peigne 5 en position active. L'autre extrémité de cet organe élastique est fixée sur une patte d'accrochage 14, elle-même fixée sur la surface externe du corps 4. On conçoit ainsi que cet organe élastique 13 tend à solliciter ce peigne 5 de sa position escamotée représentée sur la Fig.1, vers sa position active représentée sur la Fig.2, dans laquelle le ressort 13 s'est comprimé, entraînant le relèvement de ce peigne.

L'outil de manutention selon l'invention comporte également des moyens d'escamotage de ces peignes à l'encontre de cette sollicitation des moyens élastiques, pour permettre le passage de l'organe de manutention et de la tête de préhension dans le corps d'outil.

Ces moyens d'escamotage comprennent un manchon 15 comportant à l'une de ses extrémités des moyens 16 de guidage et d'entraînement adaptés pour coopérer avec la tête de préhension 1 et/ou l'organe de manutention 3, et avec des pistes de roulement 17 et 18 formées par des rails et prévues en regard l'une de l'autre dans le corps 4, pour son guidage, lors de son déplacement dans le corps d'outil, comme cela sera décrit plus en détail par la suite.

Un contrepoids 21 peut également être prévu sous les moyens d'entraînement et de guidage 16 autour de l'organe de manutention 3 pour assurer, comme cela sera décrit plus en détail par la suite, un déplacement correct de ces moyens d'escamotage.

A son autre extrémité, ce manchon comporte quatre surfaces de butée, par exemple 19 et 20, à 90° les unes par rapport aux autres, et adaptées pour coopérer avec les peignes correspondants pour les déplacer et/ou les maintenir en position escamotée, comme représenté sur la Fig.1.

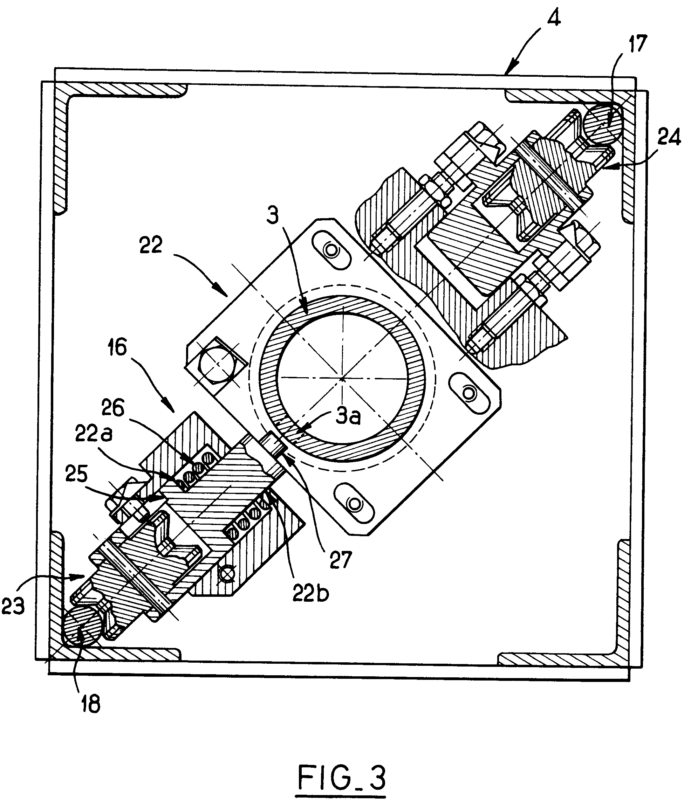

Comme on peut le voir plus particulièrement sur les Figs 1 et 3, les moyens de guidage 16 du manchon d'escamotage des peignes comprennent avantageusement une bague de support 22 disposée autour de l'organe de manutention 3 et sur laquelle sont montés libres en rotation des galets opposés 23 et 24, adaptés pour coopérer avec les pistes de roulement 17 et 18 solidaires du corps.

L'un de ces galets au moins, à savoir par exemple le galet 23, est porté par l'une des extrémités d'une structure de support 25 (Fig.3), en forme de chape, déplaçable radialement dans un logement 22a de la bague de support 22, à l'encontre de la sollicitation de moyens élastiques 26, pour suivre un trajet à deux niveaux définis par deux portions 18a, 18b de la piste 18 (Fig.1). Ces portions de piste sont parallèles à l'axe du corps d'outil mais disposées à des distances radiales différentes de cet axe, la portion 18a étant la plus éloignée de l'axe, et reliées par une portion de piste en forme de rampe 18c. Cette structure de support 25 comporte à son autre extrémité un téton 27 s'étendant dans un évidement 22b de la bague de support 22, pour l'accrochage de ces moyens de guidage et d'entraînement sur l'organe de manutention 3, comme cela sera décrit plus en détail par la suite.

Le corps d'outil comporte également des moyens de butée délimitant une position stable active des moyens d'escamotage des peignes comme cela sera décrit en détail par la suite.

On conçoit que si l'on part de la position active de ces moyens d'escamotage, représentée sur la Fig.1, ceux-ci se trouvent en position basse de maintien des peignes en position escamotée le long de la paroi du corps.

Dans cette position, les parties inférieures d'au moins une partie des surfaces de butée 19 et 20 du manchon de ces moyens d'escamotage, formant également bords d'attaque, sont en appui sur une bague de butée 28 solidaire du corps d'outil pour délimiter la position stable active mentionnée précédemment.

Lors de la manoeuvre, c'est-à-dire de la remontée, de l'organe de manutention 3, celui-ci se déplace à coulissement dans le corps d'outil 4, le contrepoids 21 et la bague de support 22, entraînant une remontée de la tête de préhension 1 et de la grappe de crayons accrochée à celle-ci. Lorsque la tête de préhension 1 et plus particulièrement la partie supérieure de celle-ci vient en appui contre le contrepoids 21, la poursuite du déplacement de l'organe de manutention 3, entraîne une remontée des moyens d'escamotage 15 dans le corps 4. Lors de cette remontée, le galet 23 passe de la première portion de piste 18a à la seconde portion 18b de celle-ci de manière que la structure de support 25 de ce galet 23 se déplace radialement vers l'organe de manutention 3, de sorte que le téton 27 de celle-ci s'engage dans un évidement correspondant 3a de l'organe de manutention 3, afin d'accrocher l'ensemble des moyens d'escamotage sur cet organe de manutention.

L'organe de manutention et ce téton assurent alors le déplacement de l'ensemble des moyens d'escamotage dans le corps. Le manchon d'escamotage 15, lors de la remontée de l'organe de manutention 3 et de la tête 1 de préhension dans le corps de l'outil, poursuit alors sa remontée et libère les peignes au fur et à mesure, de manière que ceux-ci se déplacent vers leur position active représentée sur la Fig. 2.

En effet, les bords d'attaque des moyens d'escamotage délimités par les parties inférieures des surfaces de butée 19 et 20, à 90° les unes par rapport aux autres, du manchon d'escamotage, sont décalés axialement de manière à commander un déplacement et dans ce cas, une libération des peignes, de manière successive, afin d'éviter toutes perturbations des déplacements de ceux-ci et plus particulièrement des peignes disposés à 90° les uns par rapport aux autres.

On notera également que ces bords d'attaque des surfaces de butée, peuvent être munis de rouleaux de contact par exemple 29, ces rouleaux facilitant le déplacement relatif de ces surfaces de butée par rapport aux peignes.

Les peignes étant en position active, représentée sur la Fig.2, ils permettent de maintenir la position relative des crayons de poison consommable lors de la poursuite de la remontée de la grappe dans le corps.

Cette grappe est ensuite déplacée vers un autre endroit déterminé grâce au pont passerelle pour permettre la mise en place de celle-ci dans un nouvel emplacement. Une fois en position, l'organe de manutention 3 descend dans le corps, ce qui entraîne une descente des moyens d'escamotage 15.

Etant donné que lors de la première phase de descente de l'organe de manutention 3, le galet 23 des moyens de guidage et d'entraînement 16 des moyens d'escamotage 15, coopère avec la seconde portion de piste 18b, le téton d'accrochage 27 est toujours engagé dans le trou correspondant 3a de l'organe de manutention 3, de sorte que l'ensemble des moyens d'escamotage suit le mouvement de descente de cet organe de manutention.

Les rouleaux, par exemple 29, à l'extrémité des surfaces de butée de ces moyens d'escamotage entraînent alors des déplacements successifs des peignes à l'encontre de la force exercée par les moyens élastiques 13, de leur position active représentée sur la Fig.2, dans laquelle ces peignes s'étendent à peu près perpendiculairement à la paroi du corps vers une position escamotée le long de la paroi du corps, représentée sur la Fig.1, par abaissement de ces peignes.

La poursuite de la descente de l'organe de manutention entraîne ainsi l'escamotage des peignes de manière régulière jusqu'au moment où le galet 23 passe de la seconde portion de piste 18b la plus proche de l'axe de l'organe de manutention, sur la première portion de piste 18a la plus éloignée de cet axe.

La structure de support 25 de ce galet et donc les moyens de guidage et d'entraînement 16 des moyens d'escamotage, se désolidarisent de l'organe de manutention 3. Les moyens d'escamotage poursuivent leur descente dans le corps du fait de la présence du contrepoids 21 jusqu'au moment où les rouleaux, par exemple 29 à l'extrémité de ceux-ci, viennent en contact contre la bague de butée 28 du corps délimitant la position stable d'escamotage des peignes.

L'organe de manutention 3 et la tête de préhension 1 poursuivent alors leur descente seuls pour engager totalement la grappe de crayons de poison consommable dans leur nouvel emplacement.

La suite des opérations s'opère de manière connue en soi par un décrochement de la tête de préhension de la grappe et cette tête est alors prête pour la manutention d'une nouvelle grappe.

## Revendications

1. Outil de manutention d'une grappe (2) de crayons de poison consommable, du type comportant une tête de préhension (1) de la grappe, reliée à l'extrémité d'un organe de manutention (3) déplaçable à coulissement dans un corps d'outil (4) entre une position active dans laquelle la tête (1) et au moins une partie de l'organe (3) font saillie hors du corps (4) et une position escamotée dans laquelle la tête de préhension (1), l'organe de manutention (3) et au moins une partie de la grappe (2) s'étendent dans le corps, et des peignes (5,6,7,8,9, 10) de guidage des crayons prévus à l'extrémité correspondante du corps (4) et déplaçables par relèvement entre une position escamotée dans laquelle ils s'étendent sensiblement le long de la paroi du corps (4) et une position active dans laquelle ils s'étendent sensiblement perpendiculairement à celle-ci, pour guider les crayons, caractérisé en ce qu'il comporte des moyens élastiques (13) de sollicitation des peignes en position active et des moyens d'escamotage (15) de ces peignes à l'encontre de la sollicitation des moyens élastiques (13), déplaçables entre une position active d'escamotage des peignes et une position escamotée de libération de ceux-ci, par la tête de préhension (1) et/ou l'organe de manutention (3) lors de leur déplacement entre leur position active et leur position escamotée dans le corps (4).

2. Outil de manutention selon la revendication 1, caractérisé en ce que les moyens élastiques (13) sont reliés à une extrémité, à un bras de manoeuvre (12) des peignes (5) et à une autre extrémité au corps (4).

3. Outil de manutention selon la revendication 1 ou 2, caractérisé en ce que les moyens d'escamotage comprennent un manchon (15) comportant à l'une de ses extrémités des moyens (16) d'entraînement et de guidage adaptés pour coopérer avec la tête de préhension et/ou l'organe de manutention (3) et des moyens complémentaires de guidage (17,18) solidaires du corps, lors du déplacement de ceux-ci dans le corps (4) et à son autre extrémité des surfaces de butée (19,20) adaptées pour coopérer avec les peignes pour les déplacer vers leur position escamotée.

4. Outil de manutention selon la revendication 3, dans lequel les peignes (5,6,7,8,9,10) sont disposés à 90° les uns par rapport aux autres, sur le corps d'outil (4), caractérisé en ce que le manchon comporte des surfaces de butée (19,20), à 90° les unes par rapport aux autres, dont les bords d'attaque sont décalés axialement de manière à commander des déplacements successifs des peignes à 90°.

5. Outil de manutention selon la revendication 4, caractérisé en ce que des rouleaux de contact (29) sont prévus à chaque extrémité des surfaces de butée pour faciliter le déplacement relatif de celles-ci par rapport aux peignes.

6. Outil de manutention selon l'une quelconque des revendications 3 à 5, caractérisé en ce que les moyens d'entraînement et de guidage comprennent une bague de support (22) portant des galets (23,24) adaptés pour coopérer avec des pistes de guidage (17,18) du corps (4).

7. Outil de manutention selon la revendication 6, caractérisé en ce que l'un des galets (23) est porté par une structure de support (25) déplaçable radialement par rapport à l'organe de manutention, dans la bague de support (22), pour suivre une piste (18) de guidage à deux niveaux, entre une position escamotée et une position active d'accrochage dans laquelle un téton d'accrochage (27) de cette structure de support s'engage dans un évidement (3a) de l'organe de manutention (3) pour accrocher les moyens d'escamotage sur l'organe de manutention (3).

8. Outil de manutention selon l'une quelconque des revendications précédentes, caractérisé en ce que les moyens d'escamotage (15) comportent un contrepoids (21).

9. Outil de manutention selon l'une quelconque des revendications précédentes, caractérisé en ce que le corps d'outil (4) comporte une bague (28) sur laquelle prennent appui les extrémités des surfaces de butée des moyens d'escamotage en position active.

## FIG.1

FIG. 2

## FIG_3

EP 0 508 852 A1

**Office européen des brevets**

# RAPPORT DE RECHERCHE EUROPEENNE

Numero de la demande

EP 92 40 0817

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 990 591 (STREET ET AL.)<br>* colonne 1, ligne 60 - colonne 2, ligne 23 *<br>* colonne 2, ligne 45 - ligne 63 *<br>* colonne 4, ligne 47 - ligne 50 *<br>* colonne 7, ligne 28 - ligne 50 *<br>* figures 2-3,10-11 * | 1,3,8-9 | G21C19/10 |
| A | FR-A-1 482 974 (GAAA)<br>* page 3, colonne de gauche, alinéa 2 -alinéa 3; figure 1 * | 1-2 | |
| A | FR-A-1 342 267 (CEA)<br>* page 2, colonne de droite, alinéa 1 *<br>* figure 1 * | 1-2 | |
| A | FR-A-2 163 678 (COMBUSTION ENGINEERING)<br>* page 2, ligne 24 - ligne 36 *<br>* page 6, ligne 17 - ligne 29 *<br>* figure 2 * | 1 | |
| A | FR-A-2 591 021 (COGEMA)<br>* page 3, ligne 21 - page 4, ligne 6 *<br>* figures 1-3 * | 1 | **DOMAINES TECHNIQUES RECHERCHES (Int. Cl.5)**<br><br>G21C |
| A | FR-A-2 262 376 (KWU)<br>* page 5, ligne 3 - ligne 22 *<br>* figures 4-5 * | 6-7 | |

Le présent rapport a été établi pour toutes les revendications

| Lieu de la recherche | Date d'achèvement de la recherche | Examinateur |
|---|---|---|
| LA HAYE | 06 JUILLET 1992 | CAPOSTAGNO E. |